# EUROPEAN PATENT SPECIFICATION

(11) **EP 3 414 920 B1**
(45) Date of publication and mention of the grant of the patent: **21.04.2021**
(21) Application number: 16710337.3
(22) Date of filing: 12.02.2016
(51) Int. Cl.: H04R 3/00, G11B 20/10

(54) **SYSTEMS, METHODS, AND DEVICES FOR DERIVING SAMPLING CLOCKS FOR MICROPHONES IN A WIRELESS AUDIO SYSTEM**
SYSTEME, VERFAHREN UND VORRICHTUNGEN ZUR ABLEITUNG VON ABTASTTAKTEN FÜR MIKROFONE IN EINEM DRAHTLOSEN AUDIOSYSTEM
SYSTÈMES, PROCÉDÉS, ET DISPOSITIFS DE DÉRIVATION D'HORLOGES D'ÉCHANTILLONNAGE POUR DES MICROPHONES DANS UN SYSTÈME AUDIO SANS FIL

(43) Date of publication of application: 19.12.2018
(73) Proprietor: Sony Corporation, 108-0075 Tokyo (JP)
(72) Inventor: ISBERG, Peter, 224 72 Lund (SE)
(74) Representative: Neusser, Sebastian
(86) International application number: PCT/JP2016/000731
(87) International publication number: WO 2017/138042

(56) References cited:
- US-A1- 2016 014 490
- GYÖRGY OROSZ ET AL: "Synchronization and sampling in wireless adaptive signal processing systems", PERIODICA POLYTECHNICA ELECTRICAL ENGINEERING, vol. 54, no. 1-2, 1 January 2010 (2010-01-01), page 59, XP055293237, ISSN: 0031-532X, DOI: 10.3311/pp.ee.2010-1-2.06

## Description

### Field

Various embodiments described herein relate to systems, methods, and devices in a wireless audio system and more particularly to microphone devices in a wireless audio system.

### Background

Concerts, recitals, and/or other live performances may be enjoyed by patrons in a venue. It may be desired to record the audio of a live performance using one or more audio or video devices. However, the audio quality recorded by a video recorder or a smart phone from a seat location of the user may be poor. It may be desired to record a live performance using multiple microphone devices strategically placed around the performance venue. However, audio signals recorded by the various microphone device may not be synchronized, which may lead to poor playback performance.

GYORGY OROSZ ET AL: "Synchronization and sampling in wireless adaptive signal processing systems" describes a wireless active noise control system. In this system wireless sensors (microphones) receive the signal, and the main signal processing algorithm is implemented on a central unit which produces the signal for the actuators (loud-speakers).

US 2016/014490 A1 describes devices, systems and methods of communicating acoustic information of a distributed microphone array between mobile devices.

### Summary

Various embodiments described herein can provide a method of operating a wireless audio system. The method includes establishing a wireless communication network between a plurality of microphone devices in an environment. A common radio signal used by the plurality of microphone devices is selected from a plurality of radio signals available in the environment. Respective sampling clocks are derived by respective ones of the plurality of microphone devices based on the common radio signal. Audio signals may be recorded by the respective ones of the plurality of microphone devices based on the respective sampling clocks.

In the present invention, selecting the common radio signal may include scanning the environment, by each of the plurality of microphone devices, for the plurality of radio signals available in the environment. The common radio signal may be selected out of the plurality of radio signals. The common radio signal may be selected out of the plurality of radio signals by determining one or more candidate radio signals out of the plurality of radio signals that are identified by each of the plurality of microphone devices during the scanning and selecting the common radio signal out of the one or more candidate radio signals.

In some embodiments, selecting the common radio signal out of the one or more candidate radio signals may include determining respective candidate signal powers received at respective ones of the plurality of microphone devices for each of the one or more candidate radio signals and selecting the common radio signal based on the respective candidate signal powers. Selecting the common radio signal based on the respective candidate signal powers may include determining respective average candidate signal powers associated with respective ones of the one or more candidate radio signals. One of the respective average candidate signal powers for a given candidate radio signal may be based on an average of the candidate signal powers associated with ones of the plurality of microphone devices for the given candidate radio signal. In some embodiments, selecting the common radio signal based on the respective candidate signal powers may include selecting the common radio signal based on the respective candidate signal powers for each of the plurality of microphone devices for one of the one or more candidate radio signals being greater than a threshold.

In some embodiments, selecting the common radio signal out of the one or more candidate radio signals may include providing, to a selection device, information associated with the one or more candidate radio signals and determining the radio signal based on a selection from the selection device. In some embodiments, selecting the common radio signal out of the one or more candidate radio signals may include communicating, using the wireless communication network, by a first microphone device of the plurality of microphone devices to a second microphone device of the plurality of microphone devices. The information may identify at least one of the one or more candidate radio signals visible to the first microphone device, based on the scanning the environment. The second microphone device may determine that one of the at least one of the one or more candidate radio signals visible to the first microphone device is also visible to the second microphone device. The second microphone device selects the one of the at least one of the one or more candidate radio signals as the common radio signal. The second microphone device communicates to the first microphone device, the common radio signal selected by the second microphone device.

In some embodiments, deriving the respective sampling clocks by respective ones of the plurality of microphone devices based on the common radio signal includes negotiating, over the wireless communication network, a common clock divider among the plurality of microphone devices. Each of the plurality of microphone devices may divide the common radio signal by the common clock divider to derive the respective sampling clocks. Negotiating the common clock divider among the plurality of microphone devices may include sending, to a first microphone device of the plurality of microphone devices, from remaining ones of the plurality of microphone devices, respective suggested clock dividers. The first microphone device may select the common clock divider based on the respective suggested clock dividers from the remaining ones of the plurality of microphone devices.

In some embodiments, selecting the common clock divider may include averaging the suggested clock dividers to determine an average clock divider value and rounding the average clock divider value to a whole number to obtain the common clock divider. In some embodiments, selecting the common clock divider may include determining a most commonly occurring clock divider of the suggested clock dividers, and selecting the most commonly occurring clock divide as the common clock divider.

In some embodiments, dividing the common radio signal by the common clock divider to derive the respective sampling clocks may include multiplying, by each of the plurality of microphone devices, the common radio signal by a first integer to obtain respective multiplied radio signals, and dividing, by each of the plurality of microphone devices, the respective multiplied radio signals by a second integer to derive the respective sampling clocks. The common clock divider is a ratio of the first integer to the second integer.

In some embodiments, the method of operating the wireless audio system may include processing the audio signals recorded by the respective ones of the plurality of microphone devices to produce a composite audio track. Processing the audio signals may includealigning the audio signals from the plurality of microphone devices in time based on the respective sampling clocks derived from the common radio signal. The composite audio track is produced based on the audio signals that were aligned.

Various embodiments described herein can provide a system for recording an event. The system includes a plurality of sampling microphone devices. A respective sampling microphone device of the plurality of sampling microphone devices includes a processor that is configured to receive a common radio signal that is received by the plurality of sampling microphone devices at the event. The processor may be configured to synchronize sampling of the respective sampling microphone device based on the common radio signal. The respective sampling microphone device may include a communication interface configured to communicate via a wireless communication network to one or more other sampling microphone devices in an environment. The processor is coupled to the communication interface and is further configured to perform operations including selecting the common radio signal based on a plurality of radio signals available in the environment, deriving a sampling clock based on the common radio signal, wherein the sample clock synchronizes the sampling of the respective sampling microphone device, and recording audio signals by the respective sampling microphone device based on the sampling clock. Other operations according to any of the embodiments described herein may also be performed.

In the present invention, selecting the common radio signal includes scanning the environment for the plurality of radio signals available in the environment, and determining one or more candidate radio signals out of the plurality of radio signals. Information related to one or more other candidate radio signals may be received by the communication interface from the one or more other microphone devices. A subset of the one or more candidate radio signals that include the one or more other candidate radio signals from the one or more other microphone devices may be determined. The common radio signal may be selected from the subset of the one or more candidate radio signals.

In some embodiments, selecting the common radio signal includes scanning the environment for the plurality of radio signals available in the environment, and determining one or more candidate radio signals out of the plurality of radio signals. Information related to the one or more candidate radio signals may be communicated using the communication interface, to the one or more other microphone devices. A selection of the common radio signal out of the one or more candidate radio signals may be received by the microphone device.

Various embodiments described herein can provide a method of operating a plurality of microphone devices that are in an environment to record an event. The method includes synchronizing sampling frequencies of the plurality of microphone devices to one another using a common radio signal that is received by the plurality of microphone devices. Synchronizing sampling frequencies may include deriving respective sampling frequencies from the common radio signal by respective ones of the plurality of the microphone devices, and using the respective sampling frequencies to sample audio signals from the event by each of the respective ones of the plurality of the microphone devices. Other operations according to any of the embodiments described herein may also be performed.

### Brief Description of the Drawings

Figure 1 illustrates a live performance recorded by various devices, according to various embodiments described herein.
Figure 2 illustrates a live performance being recorded by a plurality of microphone devices, according to various embodiments described herein.
Figure 3 is a block diagram of a microphone device, according to various embodiments described herein.
Figures 4 and 5 illustrate a plurality of microphone devices, according to various embodiments described herein.
Figure 6 is a block diagram of a microphone device, according to various embodiments described herein.
Figures 7 to 21 are flowcharts of operations of a wireless audio system, according to various embodiments described herein.
Figures 22 to 25 are flowcharts of operations performed by a sampling microphone device, according to various embodiments described herein.
Figures 26 to 27 are flowcharts of operations performed by a plurality of microphone devices to record an event, according to various embodiments described herein.

### Detailed Description

Various embodiments will be described more fully hereinafter with reference to the accompanying drawings. Other embodiments may take many different forms and should not be construed as limited to the embodiments set forth herein. Like numbers refer to like elements throughout.

People enjoy various live performances such as concerts, opera, theatrical performances, religious celebrations, and/or recitals. These events may be recorded by audio devices or by video recorders that include recording of the audio track for personal enjoyment after the live performance. Conventionally, these may be a recorded by an audio or video device held by the user at the seat location of the user or placed on a tripod in a location such as aisle. The microphones in audio or video recording devices may include technology to suppress ambient noise or reflections. However, the audio quality may be poor since the audio is recorded in a single location remote from the performers. Furthermore, if multiple recording devices are used, the audio sampling of these microphones may not be synchronized. A professional multi-microphone system may include microphone sampled with the same clock in a single recording device and/or using a single house clock. However, use of the same clock may provide challenges such as providing the same clock to the multiple microphones.

Various embodiments described herein may arise from the recognition that better audio quality may be obtained using multiple microphone devices placed in various locations in the live performance venue whose sampling clocks are synchronized. The microphone devices may be wireless, low-power devices with a small footprint, such as Internet of Things (IoT) devices. Each microphone device may use a local oscillator for sampling the audio signals. Each of the local oscillators may drift in frequency due to tolerances or temperature effects. A drift on the order of several milliseconds may over a recording can be tolerated. However, for a left/right stereo microphone pair, a timing accuracy of < 100 µsec may be necessary for proper stereo-quality listening. For example, 350 µsec drift between a left/right stereo microphone pair may displace the stereo image by 45 degrees. For a one hour audio recording, 100 µsec corresponds to about 0.03 ppm of accuracy. Conventional portable audio recorders have a typical clock accuracy in the range of 0.2 ppm to 50 ppm and thus may not be suitable for multiple microphone environment. As described herein, recording devices such as microphone devices may derive sampling clocks from a common source such that the audio signals recorded by the various microphone devices are synchronized with a higher clock accuracy in order to facilitate high-quality playback. As described herein, the microphone devices may include wireless microphones, adaptors that plug into a microphone device, and/or adaptors that plug into a public announcement (PA) system or mixing console. Microphone devices may receive audio from an acoustic signal or may receive analog or digital information in the form of an electrical signals such as output from a keyboard or console. Microphone devices may produce a single mono-audio track, or may produce multiple audio tracks, in the case of a stereo microphone or a surround microphone.

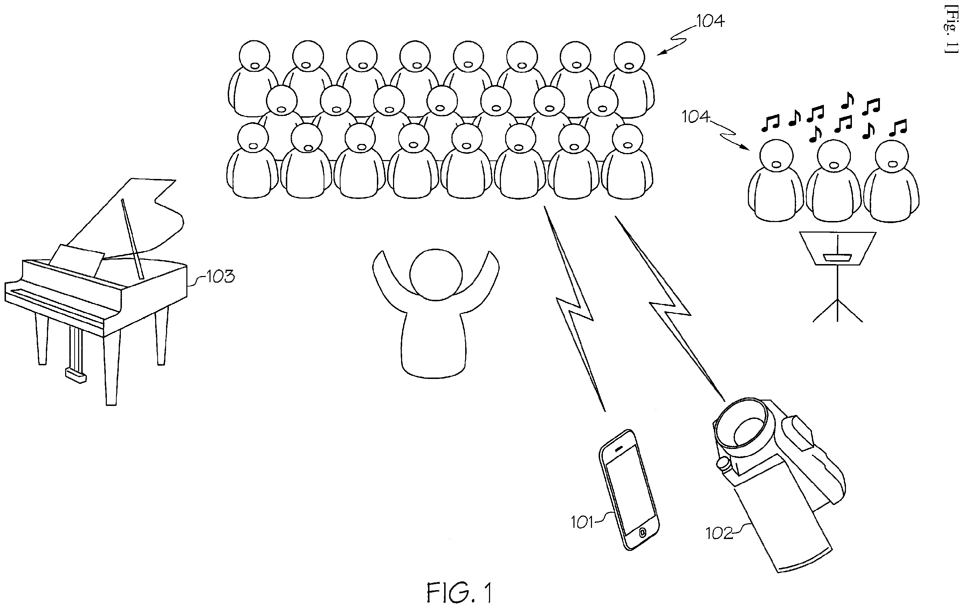

Referring now to Figure 1, a live performance is illustrated that includes a musical instrument such as a piano 103 and singers 104. A smart phone 101 or a video recorder 102 may record the live performance. However, the recorded audio quality may be poor since the audio is recorded in at a seat location of the user, remote from the performers.

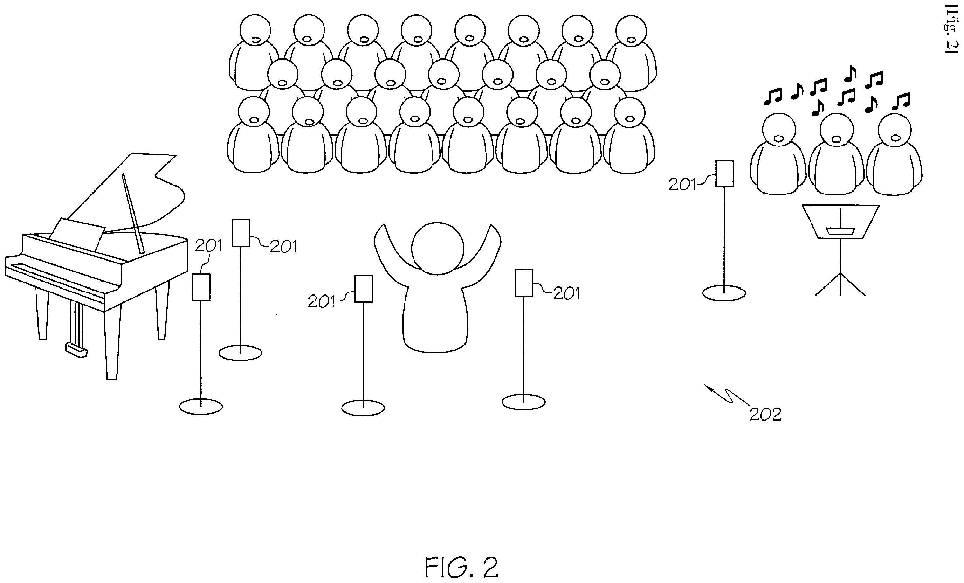

Referring now to Figure 2, the live performance of Figure 1 may be recorded by a plurality of microphone devices 201, according to various embodiments described herein. The microphone devices 201 may be placed at various locations in the performance venue environment 202 to obtain audio signals from instruments and singers.

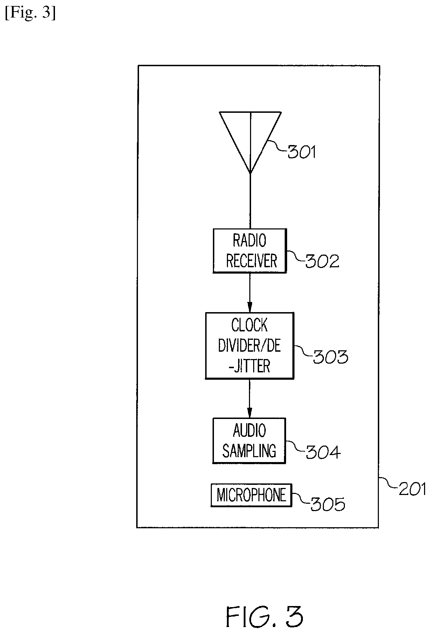

Referring now to Figure 3, a block diagram of the microphone device 201 of Figure 2 is illustrated. The microphone device may include an antenna 301 to receive audio signals from the environment of the live performance venue. The antenna 301 may be electrically connected to a radio receiver 302 that processes the signal received by the antenna 301. The received signals at the radio receiver 302 may be input to a clock divider and/or de-jitter circuit 303. The clock divider and/or de-jitter circuit 303 may divide a common radio signal to derive a sampling clock to sample the received audio signals. The clock divider and/or de-jitter circuit 303 may reduce jitter in the received audio signals using various techniques such as packet buffering, buffering delay, filtering, signal stabilization, and/or jitter estimation. In some embodiments, adaptive de-jittering may be used by the clock divider and/or de-jitter circuit 303 to allow the lengths of silence periods to be adjusted to compensate for jitter. The clock divider and/or de-jitter circuit 303 may provide a sampling clock to the audio sampling circuit 304 that samples the received audio signals. The audio sampling circuit 304 may sample audio signal received by acoustic-electric transducer/microphone 305.

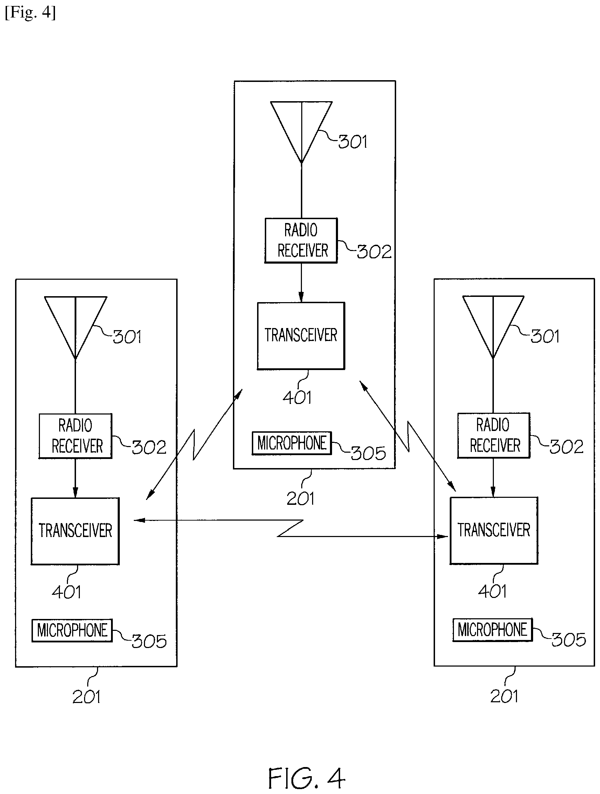

Referring now to Figure 4, two or more microphone devices 201 of Figures 2 and 3 may communicate with one another. For example, a transceiver 401 of the microphone device 201 may have a wireless interface to communicate with one or more other microphone devices 201. In some embodiments, the transceiver 401 may include the functionality of the clock divider and/or de-jitter circuit 303 of Figure 3. The transceivers 401 may communicate clock information such an identity of a common clock source, a clock divider value, and/or de-jitter information.

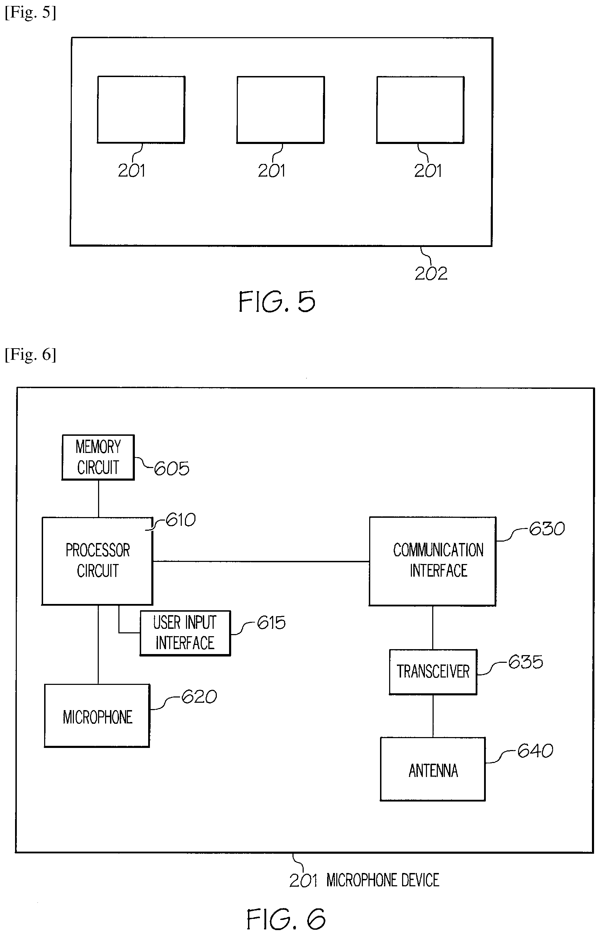

The sampling clocks used by each of the microphone devices 201 may need to be synchronized such that all of the microphone devices 201 sample audio signals with the same clock frequency. Referring now to Figure 5, two or more microphone devices 201 may be in an environment 202 of the performance venue. Each of the microphone devices 201 may use a local oscillator for sampling the audio signals. However, each of the local oscillators may drift in frequency due to tolerances or temperature effects. To improve the recorded audio quality, the sampling clocks of the microphone devices 201 may be synchronized. To accomplish synchronization of the microphone devices 201, existing radio signals in the environment 501 of the performance venue may be used. For example, signals such as Frequency Modulation (FM), Amplitude Modulation (AM), Global Navigation Satellite System (GNSS), Global System for Mobile Communication (GSM), Global Positioning System (GPS), Universal Mobile Telecommunications System (UMTS), and/or Long Term Evolution (LTE) are available in most populated locations around the world. Each of the microphone devices 201 may listen for these commonly available radio signals and select a common radio signal on which to base sampling of the audio signals. In some embodiments, a dedicated synchronization beacon may be used as the common radio signal for the microphone devices 201.

According to some embodiments, once powered on, each of the microphone devices 201 searches for existing radio signals in the environment 501. The microphone devices 201 negotiate with other microphone devices 201 within communication range to determine a suitable carrier frequency based on a common existing radio signal. Communication between microphone devices 201 may occur, for example, over Wi-Fi or Bluetooth frequencies. Additional microphone devices 201 may join the negotiation at discrete points in time. In some embodiments, the microphone devices 201 may make a common radio signal search based upon a user request. These results of the common radio signal search may be presented to the user, such that the user may select the common radio signal to use. These results may be presented to the user within a specialized application or in a browser. The microphone devices 201 may have a built-in web server to facilitate user communication. In some embodiments, the negotiation for a common radio signal between microphone devices 201 may be done automatically once triggered by the user, but not started upon powering on a microphone device 201. In some embodiments, the microphone devices 201 may be pre-configured by the user to listen for a certain existing radio frequency signal such as, for example FM 107MHz.

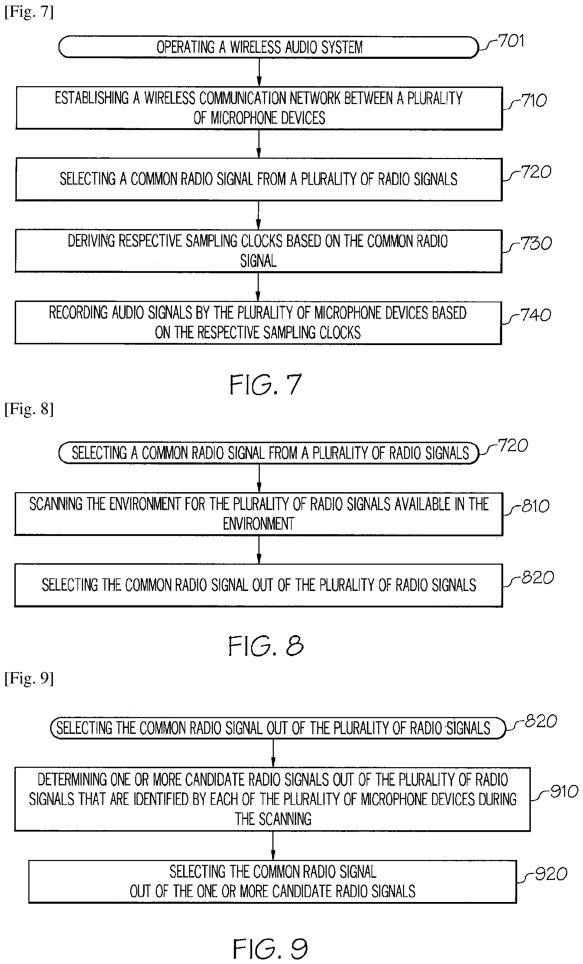

Figure 6 is a block diagram of a microphone device 201. Referring now to Figure 6, microphone device 201 may include a microphone 620 for receiving audio signals. The microphone device 201 may include a user input interface 615 to send and/or receive information from a user. A memory circuit 605 may be coupled to the processor circuit 610. The antenna 640 may be coupled to a transceiver circuit 635 which is, in turn, coupled to a communication interface 630. The communication interface 630 may facilitate communication via protocols such as Wi-Fi or Bluetooth to other microphone devices. The communication interface 630 may be coupled to a processor circuit 610 that samples audio signals, processes audio samples, negotiates clock dividers, etc. As will be discussed in further detail with reference to Figures 7 to 27.

Figures 7 to 21 are flowcharts of operations 701 of a wireless audio system, according to various embodiments. Referring now to Figure 7, at block 710, a wireless communication network may be established between a plurality of microphone devices 201 of any of Figures 2 to 6. The wireless communication network facilitates negotiation between the microphone devices 201 to determine a common radio signal to use for deriving sampling clocks. At block 720, a common radio signal is selected from a plurality of radio signals available in the environment. At block 730, respective sampling clocks are derived by the microphone devices 201 based on the common radio signal that was selected at block 720. At block 740, the audio signals are recorded by the microphone devices 201 based on the respective sampling clocks derived at block 730.

Referring now to Figure 8, selecting a common radio signal from a plurality of radio signals as in block 720 of Figure 7, may include scanning the environment for the plurality of radio signals available in the environment at block 810. A common radio signal is selected out of the plurality of radio signals at block 820. Referring now to Figure 9, selecting the common radio signal out of the plurality of radio signals at block 820 may include determining one or more candidate radio signals out of the plurality of radio signals that are identified by each of the microphone devices during scanning, at block 910. Determining the candidate radio signals may include qualifying the radio signals based on signal characteristics such as signal strength or signal quality. The common radio signal may be selected out of the one or more candidate radio signals that are available to the microphone devices 201, at block 920.

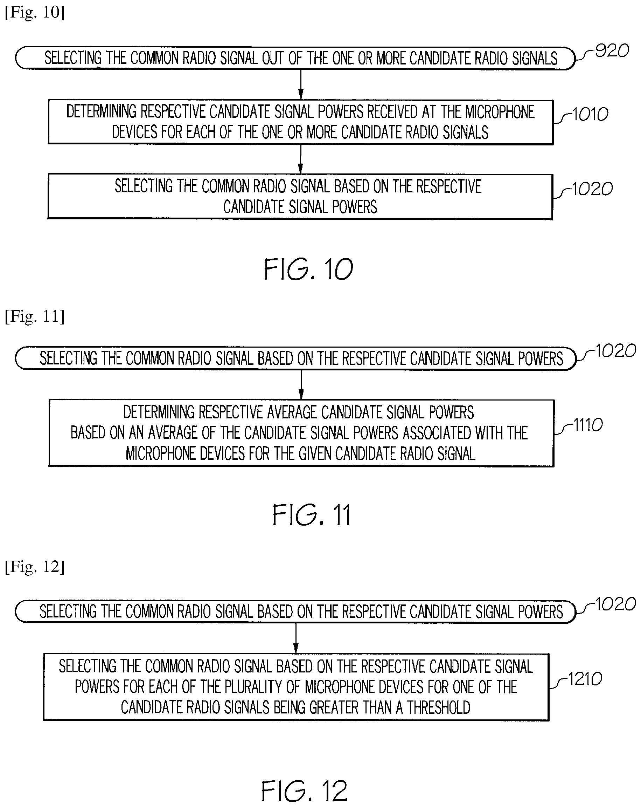

Referring now to Figure 10, selecting the common radio signal out of the one or more candidate radio signals at block 920 of Figure 9 may include determining respective candidate signal powers received at the microphone devices for each of the one or more candidate radio signals, at block 1010. The candidate signal power may be determined by measuring the received signal strength of the candidate radio signal at the microphone device. The common radio signal may be selected based on the respective candidate signal powers, at block 1020. For example, if three different candidate radio signals are under consideration, the signal power received at each microphone device 201 may be measured. In some embodiments, the signal powers for a given candidate radio signal may be summed across all of the microphone device is 201 to obtain a total signal power for the given candidate radio signal. The candidate radio signal with the highest total signal power may be selected as the common radio signal for use by the microphone devices 201 to derive sampling clocks.

Referring now to Figure 11, in some embodiments, selecting the common radio signal based on the respective candidate signal powers of block 1020 of Figure 10 may include determining respective average candidate signal powers based on an average of the candidate signal powers associated with the microphone devices 201 for the given candidate radio signal, at block 1110. For example, for each candidate signal, the received signal power is measured for each of the microphone devices and averaged to obtain the average signal power for each of the candidate signals. The common radio signal may be selected to be the candidate signal with the highest average signal power across the microphone devices. Referring now to Figure 12, in some embodiments, selecting the common radio signal based on the respective candidate signal powers of block 1020 of Figure 10 may include selecting the common radio signal based on the respective candidate signal powers for each of the microphone devices 201 being greater then a threshold. This ensures that each microphone receives the common radio signal at some signal strength greater than the threshold signal power.

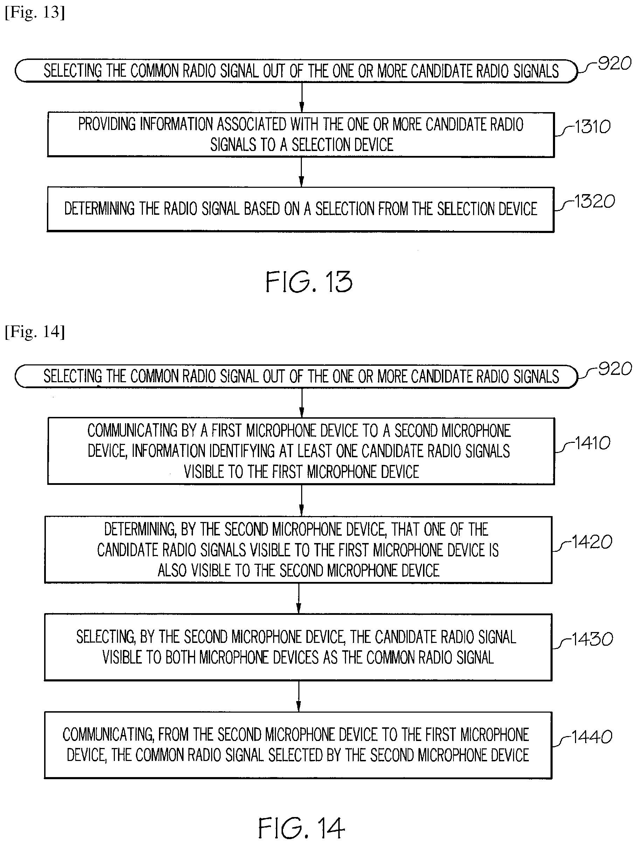

Referring now to Figure 13, in some embodiments, selecting the common radio signal out of the one or more candidate radio signals at block 920 of Figure 9 may include providing information associated with one or more candidate radio signals to a selection device, at block 1310. The selection device may include a user device such as a smart phone, computer, or tablet used for controlling the wireless audio system. The user may select a candidate radio signal for use as the common radio signal for deriving sampling clocks by some or all of the microphone devices. The radio signal used may be determined based on the selection from the user device at block 1320.

Referring now to Figure 14, in some embodiments, selecting the common radio signal out of the one or more candidate radio signals at block 920 of Figure 9 may include communicating by a first microphone device to a second microphone device information identifying at least one of the candidate radio signals visible to the first microphone device, at block 1410. The second microphone device may determine that one of the candidate radio signals visible to the first microphone device is also visible to the second microphone device at block 1420. The second microphone device may select the candidate radio signal that is visible to both microphone devices as the common radio signal, at block 1430. The second microphone device may communicate to the first microphone device the common radio signal selected by the second microphone device, at block 1440. Communication between microphones may occur over a wireless communication network using Wi-Fi, Bluetooth, or other communication protocols. In some embodiment, a user device such as a computer or smart phone may behave as a central hub or router and facilitate communication between microphone devices.

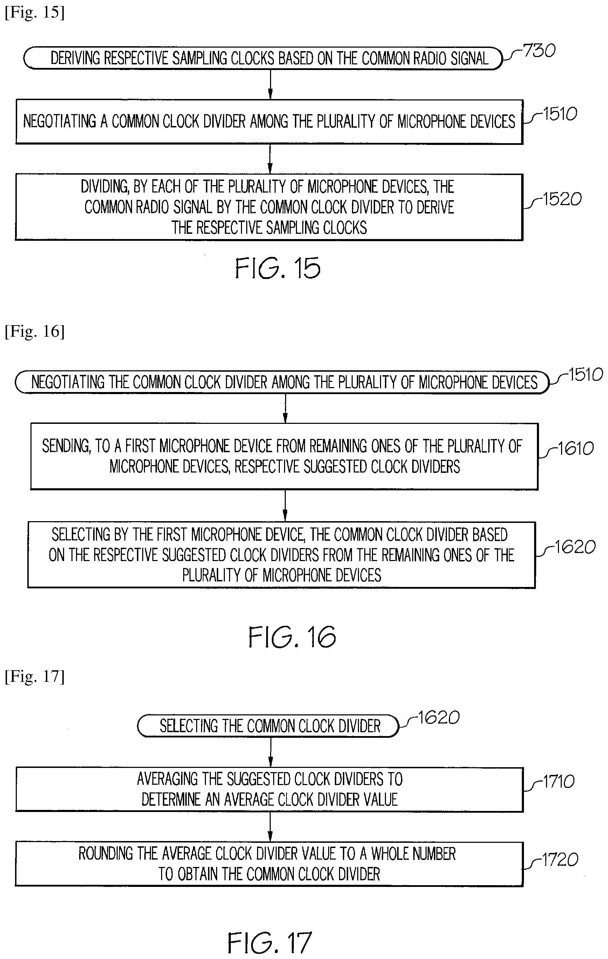

Referring now to Figure 15, deriving respective sampling clocks based on the common radio signal at block 730 of Figure 7 may include negotiating a common clock divider for use by the plurality of microphone devices, at block 1510. Once the common clock divider is negotiated, each of the microphone devices may divide the common radio signal by the common clock divider to derive their respective sampling clocks, at block 1520. Referring now to Figure 16, negotiating the common clock divider among the microphone devices at block 1510 may include sending to a first microphone device, from the other microphone devices, suggested clock dividers, at block 1610. In some embodiments, the first microphone device may behave as a master node in a peer-to-peer network and select the common clock divider based on the suggested clock dividers from the other microphone devices, at block 1620.

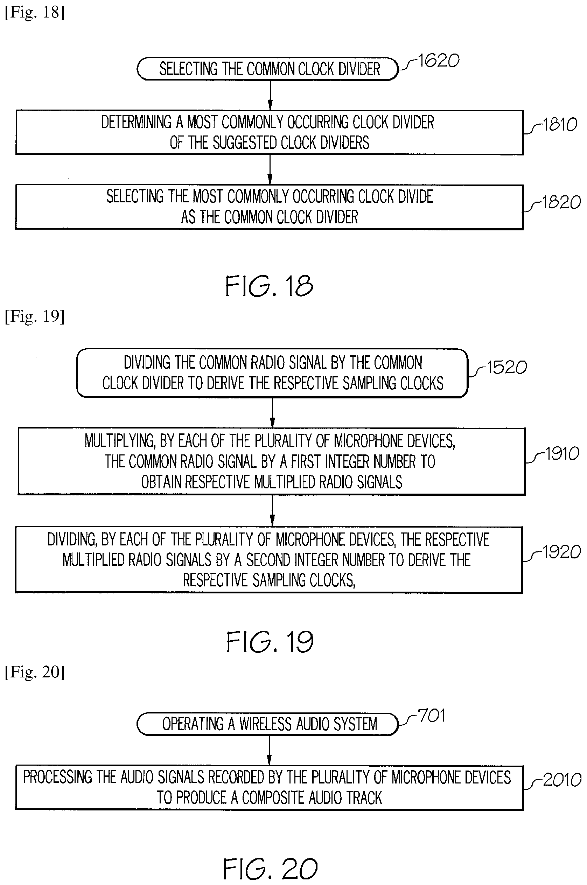

The common clock divider may be selected, at block 1620 using a variety of criterion such as averaging and/or selecting a mathematical mode of the suggested clock divider values. Referring now to Figure 17, in some embodiments, the suggested clock dividers may be averaged to determine an average clock divider value, at block 1710. If the average clock divider value is not a whole number, it may be rounded to a whole number to derive the common clock divider, at block 1720. Referring now to Figure 18, the common clock divider may be selected by determining a most frequently occurring clock divider of the suggested clock dividers, at block 1810. The most often occurring clock divider may be selected as the common clock divider, at block 1820. In other words, a clock divider that is most frequently selected by the microphone devices may be used as the common clock divider.

In some cases, simple clock division may not be accurate enough to obtain a suitable common sampling clock. Referring now to Figure 19, the common radio signal may be divided by the common clock divider to obtain the respective sampling clocks at block 1520 by scaling by a ratio. The scaling by a ratio may include multiplying, the common radio signal, by a first integer to obtain a multiplied radio signal, at block 1910. In some embodiments, multiplying may be accomplished using a phase-locked loop. The multiplied radio signal, may be divided by a second integer to derive the respective sampling clock, at block 1920. In this case, the common clock divider is the ratio of the first integer to the second integer. This procedure may be repeated for each of the microphone devices. In some embodiments, radio signals occurring in the environment may not provide a suitable frequency for deriving the clock. In this case, an electric field based on the building power grid, usually occurring at 50 Hz or 60 Hz may be used. A phase-locked loop may then be used to multiply the 50 Hz or 60 Hz signal to generate a higher rate sampling clock such as one at 48 kHz. In other words, the common radio signal may be multiplied instead of divided to obtain a higher sampling rate.

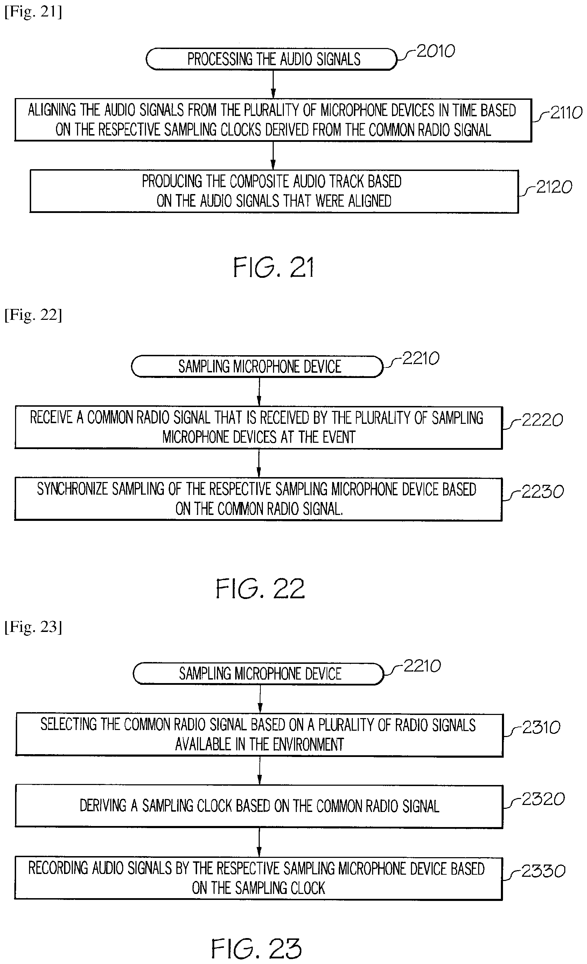

The audio signal may be sampled using the sampling clock to produce an audio track. A single/mono audio track may be produced in the case of mono-microphone, corresponding to a single audio channel. In the case of a stereo microphone or a surround microphone, two or more audio tracks may be produced, which may correspond to two or more audio channels. Audio tracks may be stored in the memory circuit 605 of Figure 6 in the microphone device and/or stored in a memory location accessible to the microphone device across the wireless network. Post-processing of the audio tracks obtained by the various microphone devices may be done in order to produce a high-quality audio signal that is representative of the performance. Post-processing may be done via an application on the user device and/or using a separate software program that runs on a computer or other computing device. Referring now to Figure 20, the audio signals recorded by the various microphone devices may be processed to produce a composite audio track, at block 2010. Referring now to Figure 21, processing the audio signals of block 2010 of Figure 20 may include aligning the audio signals from the various microphone devices in time based on the respective sampling clocks derived from the common radio signal, at block 2110. The composite audio track may be produced based on the audio signals that were aligned, at block 2120. This composite audio track may be a high-quality stereo signal since it is a conglomeration of audio signals sampled by various microphones.

Figures 22 to 25 are flowcharts of operations performed by a sampling microphone device, according to various embodiments. The sampling microphone device may be similar to the microphone devices of Figures 2 to 6. Referring now to Figure 22, the sampling microphone device may receive a common radio signal that is received by the plurality of sampling microphone devices at the event or performance, at block 2220. Sampling of the respective sampling microphone device may be synchronized based on the common radio signal, at block 2230.

Referring now to Figure 23, the common radio signal may be selected based on a plurality of radio signals available in the environment, at block 2310. A sampling clock may be derived based on the common radio signal, at block 2320. Audio signals may be recorded by the sampling microphone device based on the sampling clock, at block 2330. Recorded audio signals may be stored in the microphone device 201 of Figure 6 in memory circuit 605 or at a location accessible across the network.

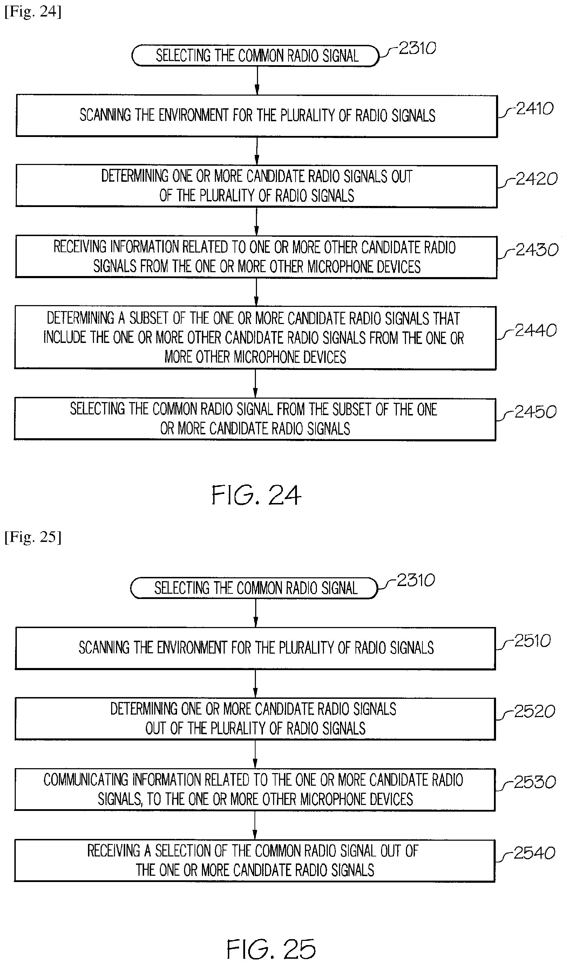

In some embodiments, the sampling microphone device may behave as a master node in a peer-to-peer network. In this case, the sampling microphone device, based on radio signals detected by other sampling microphone devices, selects the common radio signal for use by the microphone devices in the peer-to-peer network. Referring now to Figure 24, selecting the common radio signal of block 2310 of Figure 23 may include scanning the environment for a plurality of radio signals at block 2410. One or more candidate radio signals may be determined out of the radio signals that are available in the environment, at block 2420. Information related to one or more candidate radio signals may be received from one or more of the other microphone devices, at block 2430. A subset of the one or more candidate radio signals may be determined, at block 2440. The subset of the candidate radio signals include candidate radio signals that are available to the other microphone devices. The common radio signal may be selected from the subset of the one or more candidate radio signals, at block 2450.

In some embodiments, the sampling microphone device may behave as a slave node in a peer-to-peer network. In this case, a peer sampling microphone device decides which of the radio signals available in the environment is used as the common radio signal. Referring now to Figure 25, selecting the common radio signal at block 2310 of Figure 23, may include scanning the environment for the radio signals that are available, at block 2510. One or more candidate radio signals may be determined out of the radio signals available in the environment, at block 2520. Information related to one or more candidate radio signals may be communicated to the other microphone devices, at block 2530. The selection of the common radio signal may be received from another sampling microphone device, at block 2540.

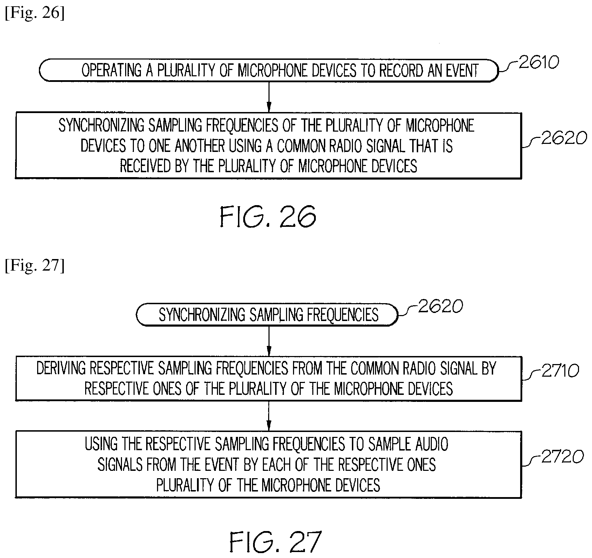

Figures 26 to 27 are flowcharts of operations performed by a plurality of microphone devices to record an event, according to various embodiments. Referring now to Figure 26, several microphone devices may be operating to record audio of an event, at block 2610. The sampling frequency of the microphone devices may be synchronized to one another using a common radio signal that is received by the plurality of microphone devices, at block 2620. Referring now to Figure 27, synchronizing the sampling frequencies of block 2620 of Figure 26 may include deriving sampling frequencies from the common radio signal by each of the microphone devices, at block 2710. The respective sampling frequencies may be used by each of the microphone devices to sample audio signals from the event, at block 2720.

According to some embodiments described herein, a user that wants to record the audio of a performance or event may place several microphone devices at various locations around the performance venue. Each of the microphones may sample and/or record the audio signals using a common reference clock. Once the various audio streams that are recorded are processed, a high-quality audio signal may be produced. The effects of audio reflections such as a "muddy" sound that is evident when a conventional microphone is not in an optimal location are thus minimized. In some embodiments, one or more of the microphone devices may be placed in locations to sample ambient noise or other interference and may be used to cancel out these erratic sounds in the audio stream. The noise cancelling microphone devices may derive a sampling clock based on the common radio signal in order to sample the noise. In some embodiments, the microphone devices may be capable of streaming audio in real time with low latency such that the microphone devices may be used for a public announcement (PA) system. The microphone devices may not have an attached microphone in the housing but provide a connector to interface to a standard microphone or to a lavalier microphone.

Various embodiments were described herein with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

It will be understood that, when an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Furthermore, "coupled", "connected", "responsive", or variants thereof as used herein may include wirelessly coupled, connected, or responsive. Like numbers refer to like elements throughout. The terminology used herein is for the purpose of describing particular embodiments only and is not intended to be limiting of the invention. As used herein, the singular forms "a", "an" and "the" are intended to include the plural forms as well, unless the context clearly indicates otherwise. Well-known functions or constructions may not be described in detail for brevity and/or clarity.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. Moreover, as used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

For purposes of illustration and explanation only, various embodiments of the present invention were described herein in the context of receivers that are configured to receive audio and/or other radio signals. It will be understood, however, that the present invention is not limited to such embodiments and may be embodied generally in any wireless communication terminal that is configured to transmit and receive according to one or more radio access technologies.

As used herein, the terms "user equipment", "user device", or the like, includes cellular and/or satellite radiotelephone(s) with or without a display (text/graphical); Personal Communications System (PCS) terminal(s) that may combine a radiotelephone with data processing, facsimile and/or data communications capabilities; Personal Digital Assistant(s) (PDA) or smart phone(s) that can include a radio frequency transceiver and a pager, Internet/Intranet access, Web browser, organizer, calendar and/or a global positioning system (GPS) receiver; and/or conventional laptop (notebook) and/or palmtop (netbook) computer(s) or other appliance(s), which include a radio frequency transceiver. Finally, the term "node" includes any fixed, portable and/or transportable device that is configured to communicate with one or more user equipment/devices and/or a core network.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof.

Example embodiments were described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by processor circuitry. These computer program instructions may be provided to processor circuitry of a general purpose computer circuit, special purpose computer circuit such as a digital processor, and/or other programmable data processor circuit to produce a machine, such that the instructions, which execute via the processor circuitry of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). These computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, embodiments of the present invention may be embodied in hardware and/or in software (including firmware, resident software, micro-code, etc.) that runs on a processor such as a digital signal processor, which may collectively be referred to as "processor circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows. The matter for which protection is sought is defined in the attached set of claims.

## Claims

1. A method of operating a wireless audio system, the method comprising:
establishing (710) a wireless communication network between a plurality of microphone devices (201) in an environment (202);
deriving (730) respective sampling clocks for sampling audio signals for recording by respective ones of the plurality of microphone devices (201) based on a common radio signal;
recording (740) the audio signals by the respective ones of the plurality of microphone devices (201) based on sampling the audio signals by the respective sampling clocks; and selecting (720) the common radio signal used by the plurality of microphone devices (201) from a plurality of radio signals available in the environment, **characterized in that** the selecting (720) the common radio signal comprises:
scanning (810) the environment (202), by each of the plurality of microphone devices (201), for the plurality of radio signals available in the environment (202);
determining (910) one or more candidate radio signals out of the plurality of radio signals that are identified by each of the plurality of microphone devices (201) during the scanning; and
selecting (920) the common radio signal out of the one or more candidate radio signals.

2. The method of Claim 1, wherein the selecting (920) the common radio signal out of the one or more candidate radio signals comprises:
determining(1010) respective candidate signal powers received at respective ones of the plurality of microphone devices (201) for each of the one or more candidate radio signals; and
selecting (1020) the common radio signal based on the respective candidate signal powers.

3. The method of Claim 2, wherein the selecting (1020) the common radio signal based on the respective candidate signal powers comprises:
determining (1110) respective average candidate signal powers associated with respective ones of the one or more candidate radio signals, wherein one of the respective average candidate signal powers for a given candidate radio signal is based on an average of the candidate signal powers associated with ones of the plurality of microphone devices (201) for the given candidate radio signal.

4. The method of Claim 2 or 3, wherein the selecting (1020) the common radio signal based on the respective candidate signal powers comprises:
Selecting (1210) the common radio signal based on the respective candidate signal powers for each of the plurality of microphone devices (201) for one of the one or more candidate radio signals being greater than a threshold.

5. The method of any of Claims 1-4, wherein the selecting (920) the common radio signal out of the one or more candidate radio signals further comprises:
providing (1310), to a selection device, information associated with the one or more candidate radio signals; and
determining (1320) the radio signal based on a selection from the selection device.

6. The method of any of Claims 1-5, wherein the selecting (920) the common radio signal out of the one or more candidate radio signals further comprises:
communicating (1410), using the wireless communication network, by a first microphone device (201) of the plurality of microphone devices (201) to a second microphone device (201) of the plurality of microphone devices (201), information identifying at least one of the one or more candidate radio signals visible to the first microphone device (201), based on the scanning the environment (202);
determining (1420), by the second microphone device (201), that one of the at least one of the one or more candidate radio signals visible to the first microphone device (201) is also visible to the second microphone device (201);
selecting (1430), by the second microphone device (201), the one of the at least one of the one or more candidate radio signals as the common radio signal; and
communicating (1440), from the second microphone device (201) to the first microphone device (201), the common radio signal selected by the second microphone device (201).

7. The method of any of the preceding Claims, wherein the deriving (730) the respective sampling clocks by respective ones of the plurality of microphone devices (201) based on the common radio signal comprises:
negotiating (1510), over the wireless communication network, a common clock divider among the plurality of microphone devices (201); and
dividing (1520), by each of the plurality of microphone devices (201), the common radio signal by the common clock divider to derive the respective sampling clocks.

8. The method of Claim 7, wherein the negotiating (1510) the common clock divider among the plurality of microphone devices (201) comprises:
sending (1610), to a first microphone device (201) of the plurality of microphone devices (201), from remaining ones of the plurality of microphone devices (201), respective suggested clock dividers; and
selecting (1620) by the first microphone device (201), the common clock divider based on the respective suggested clock dividers from the remaining ones of the plurality of microphone devices (201).

9. The method of Claim 8, wherein the selecting (1620) the common clock divider comprises:
averaging (1710) the suggested clock dividers to determine an average clock divider value; and
rounding (1720) the average clock divider value to a whole number to obtain the common clock divider.

10. The method of Claim 8 or 9, wherein the selecting (1620) the common clock divider comprises:
determining (1810) a most commonly occurring clock divider of the suggested clock dividers; and
selecting (1820) the most commonly occurring clock divide as the common clock divider.

11. A system for recording an event, the system comprising:
a plurality of sampling microphone devices (2210), a respective sampling microphone device of the plurality of sampling microphone devices (2210) comprising
a communication interface (630) configured to communicate via a wireless communication network to one or more other sampling microphone devices (2210) in an environment (202); and
a processor (610) that is coupled to the communication interface (630) and is configured to perform operations comprising:
receiving (2220) a common radio signal that is received by the plurality of sampling microphone devices (2210) at the event,
synchronizing (2230) sampling of the respective sampling microphone device based on the common radio signal;
deriving (2320) a sampling clock based on the synchronizing sampling of the respective sampling microphone device (2210); and
recording (2330) audio signals by the respective sampling microphone device based on the sampling clock, wherein the processor (610) is further configured to perform selecting (2310) the common radio signal based on a plurality of radio signals available in the environment (202), **characterized in that** the selecting (2310) the common radio signal comprises
scanning (2410) the environment (202) for the plurality of radio signals available in the environment (202);
determining (2420) one or more candidate radio signals out of the plurality of radio signals;
receiving (2430), by the communication interface (630), information related to one or more other candidate radio signals, from the one or more other microphone devices (2210);
determining (2440) a subset of the one or more candidate radio signals that include the one or more other candidate radio signals from the one or more other microphone devices (2210); and
selecting (2450) the common radio signal from the subset of the one or more candidate radio signals.

12. The system for recording an event of Claim 11, wherein the selecting (2310) the common radio signal comprises:
scanning (2510) the environment (202) for the plurality of radio signals available in the environment (202);
determining (2520) one or more candidate radio signals out of the plurality of radio signals;
communicating (2530), using the communication interface (630), information related to the one or more candidate radio signals, to the one or more other microphone devices (201); and
receiving (2540) a selection of the common radio signal out of the one or more candidate radio signals.

## Patentansprüche

1. Verfahren zum Betreiben eines drahtlosen Audiosystems, wobei das Verfahren umfasst:
Einrichten (710) eines Drahtloskommunikationsnetzwerks zwischen mehreren Mikrofonvorrichtungen (201) in einer Umgebung (202);
Ableiten (730) jeweiliger Abtasttakte zum Abtasten von Audiosignalen zur Aufzeichnung durch jeweilige der mehreren Mikrofonvorrichtungen (201) basierend auf einem gemeinsamen Funksignal;
Aufzeichnen (740) der Audiosignale durch die jeweiligen der mehreren Mikrofonvorrichtungen (201) basierend auf dem Abtasten der Audiosignale durch die jeweiligen Abtasttakte;
und
Auswählen (720) des gemeinsamen Funksignals, das von den mehreren Mikrofonvorrichtungen (201) verwendet wird, aus mehreren in der Umgebung verfügbaren Funksignalen, **dadurch gekennzeichnet, dass** das Auswählen (720) des gemeinsamen Funksignals umfasst:
Scannen (810) der Umgebung (202) durch jede der mehreren Mikrofonvorrichtungen (201) nach den mehreren in der Umgebung (202) verfügbaren Funksignalen;
Bestimmen (910) eines oder mehrerer Kandidatenfunksignale aus den mehreren Funksignalen, die von jeder der mehreren Mikrofonvorrichtungen (201) während des Scannens identifiziert werden; und
Auswählen (920) des gemeinsamen Funksignals aus dem einen oder mehreren Kandidatenfunksignalen.

2. Verfahren nach Anspruch 1, wobei das Auswählen (920) des gemeinsamen Funksignals aus dem einen oder mehreren Kandidatenfunksignalen umfasst:
Bestimmen (1010) jeweiliger Kandidatensignalleistungen, die an jeweiligen der mehreren Mikrofonvorrichtungen (201) für jedes der einen oder mehreren Kandidatenfunksignale empfangen werden; und
Auswählen (1020) des gemeinsamen Funksignals basierend auf den jeweiligen Kandidatensignalleistungen.

3. Verfahren nach Anspruch 2, wobei das Auswählen (1020) des gemeinsamen Funksignals basierend auf den jeweiligen Kandidatensignalleistungen umfasst:
Bestimmen (1110) jeweiliger durchschnittlicher Kandidatensignalleistungen, die den jeweiligen des einen oder der mehreren Kandidatenfunksignale zugeordnet sind, wobei eine der jeweiligen durchschnittlichen Kandidatensignalleistungen für ein gegebenes Kandidatenfunksignal auf einem Durchschnitt der Kandidatensignalleistungen basiert, die einer der mehreren Mikrofonvorrichtungen (201) für das gegebene Kandidatenfunksignal zugeordnet sind.

4. Verfahren nach Anspruch 2 oder 3, wobei das Auswählen (1020) des gemeinsamen Funksignals basierend auf den jeweiligen Kandidatensignalleistungen umfasst:
Auswählen (1210) des gemeinsamen Funksignals basierend darauf, dass die jeweiligen Kandidatensignalleistungen für jede der mehreren Mikrofonvorrichtungen (201) für eines der einen oder mehreren Kandidatenfunksignale größer als ein Schwellenwert sind.

5. Verfahren nach einem der Ansprüche 1-4, wobei das Auswählen (920) des gemeinsamen Funksignals aus dem einen oder mehreren Kandidatenfunksignalen ferner umfasst:
Bereitstellen (1310) von Informationen, die dem einen oder mehreren Kandidatenfunksignalen zugeordnet sind, für eine Auswahlvorrichtung; und
Bestimmen (1320) des Funksignals basierend auf einer Auswahl von der Auswahlvorrichtung.

6. Verfahren nach einem der Ansprüche 1-5, wobei das Auswählen (920) des gemeinsamen Funksignals aus dem einen oder mehreren Kandidatenfunksignalen ferner umfasst:
Kommunizieren (1410), unter Verwendung des Drahtloskommunikationsnetzwerks, durch eine erste Mikrofonvorrichtung (201) der mehreren Mikrofonvorrichtungen (201) an eine zweite Mikrofonvorrichtung (201) der mehreren Mikrofonvorrichtungen (201), von Informationen, die mindestens eines der einen oder mehreren Kandidatenfunksignale identifizieren, die für die erste Mikrofonvorrichtung (201) sichtbar sind, basierend auf dem Scannen der Umgebung (202);
Bestimmen (1420), durch die zweite Mikrofonvorrichtung (201), dass eines der mindestens einen der einen oder mehreren Kandidatenfunksignale, die für die erste Mikrofonvorrichtung (201) sichtbar sind, auch für die zweite Mikrofonvorrichtung (201) sichtbar ist;
Auswählen (1430), durch die zweite Mikrofonvorrichtung (201), des einen des mindestens einen der einen oder mehreren Kandidatenfunksignale als das gemeinsame Funksignal; und
Kommunizieren (1440) des gemeinsamen Funksignals, das von der zweiten Mikrofonvorrichtung (201) ausgewählt wurde, von der zweiten Mikrofonvorrichtung (201) an die erste Mikrofonvorrichtung (201).

7. Verfahren nach einem der vorhergehenden Ansprüche, wobei das Ableiten (730) der jeweiligen Abtasttakte durch jeweilige der mehreren Mikrofonvorrichtungen (201) basierend auf dem gemeinsamen Funksignal umfasst:
Verhandeln (1510), über das drahtlose Kommunikationsnetzwerk, eines gemeinsamen Taktteilers unter den mehreren Mikrofonvorrichtungen (201); und
Teilen (1520) des gemeinsamen Funksignals durch den gemeinsamen Taktteiler durch jede der mehreren Mikrofonvorrichtungen (201), um die jeweiligen Abtasttakte abzuleiten.

8. Verfahren nach Anspruch 7, wobei das Verhandeln (1510) des gemeinsamen Taktteilers unter den mehreren Mikrofonvorrichtungen (201) umfasst:
Senden (1610) von jeweils vorgeschlagenen Taktteilern an eine erste Mikrofonvorrichtung (201) der mehreren Mikrofonvorrichtungen (201) aus den verbleibenden der mehreren Mikrofonvorrichtungen (201); und
Auswählen (1620) des gemeinsamen Taktteilers durch die erste Mikrofonvorrichtung (201), basierend auf den jeweiligen vorgeschlagenen Taktteilern aus den verbleibenden der mehreren Mikrofonvorrichtungen (201).

9. Verfahren nach Anspruch 8, wobei das Auswählen (1620) des gemeinsamen Taktteilers umfasst:
Mitteln (1710) der vorgeschlagenen Taktteiler, um einen durchschnittlichen Taktteilerwert zu bestimmen; und
Runden (1720) des durchschnittlichen Taktteilerwertes auf eine ganze Zahl, um den gemeinsamen Taktteiler zu erhalten.

10. Verfahren nach Anspruch 8 oder 9, wobei das Auswählen (1620) des gemeinsamen Taktteilers umfasst:
Bestimmen (1810) eines am häufigsten vorkommenden Taktteilers aus den vorgeschlagenen Taktteilern; und
Auswählen (1820) der am häufigsten vorkommenden Taktteilung als den gemeinsamen Taktteiler.

11. System zum Aufzeichnen eines Ereignisses, wobei das System umfasst:
mehrere Abtastmikrofonvorrichtungen (2210), wobei eine jeweilige Abtastmikrofonvorrichtung der mehreren Abtastmikrofonvorrichtungen (2210) umfasst eine Kommunikationsschnittstelle (630), die dazu ausgelegt ist, über ein drahtloses Kommunikationsnetzwerk mit einer oder mehreren anderen Abtastmikrofonvorrichtungen (2210) in einer Umgebung (202) zu kommunizieren; und
einen Prozessor (610), der mit der Kommunikationsschnittstelle (630) gekoppelt ist und dazu ausgelegt ist, Operationen durchzuführen, die umfassen:
Empfangen (2220) eines gemeinsamen Funksignals, das von den mehreren Abtastmikrofonvorrichtungen (2210) bei dem Ereignis empfangen wird,
Synchronisieren (2230) des Abtastens der jeweiligen Abtastmikrofonvorrichtung basierend auf dem gemeinsamen Funksignal;
Ableiten (2320) eines Abtasttaktes basierend auf der Synchronisationsabtastung der jeweiligen Abtastmikrofonvorrichtung (2210); und
Aufzeichnen (2330) von Audiosignalen durch die jeweilige Abtastmikrofonvorrichtung basierend auf dem Abtasttakt, wobei der Prozessor (610) ferner dazu ausgelegt ist, das Auswählen (2310) des gemeinsamen Funksignals basierend auf mehreren in der Umgebung (202) verfügbaren Funksignalen durchzuführen, **dadurch gekennzeichnet, dass** das Auswählen (2310) des gemeinsamen Funksignals umfasst Scannen (2410) der Umgebung (202) nach den mehreren in der Umgebung (202) verfügbaren Funksignalen;
Bestimmen (2420) eines oder mehrerer Kandidatenfunksignale aus den mehreren Funksignalen;
Empfangen (2430), durch die Kommunikationsschnittstelle (630), von Informationen, die sich auf ein oder mehrere andere Kandidatenfunksignale beziehen, von der einen oder den mehreren anderen Mikrofonvorrichtungen (2210);
Bestimmen (2440) einer Teilmenge des einen oder der mehreren Kandidatenfunksignale, die das eine oder die mehreren anderen Kandidatenfunksignale von der einen oder den mehreren anderen Mikrofonvorrichtungen (2210) beinhalten; und
Auswählen (2450) des gemeinsamen Funksignals aus der Teilmenge der einen oder mehreren Kandidatenfunksignale.

12. System zum Aufzeichnen eines Ereignisses nach Anspruch 11, wobei das Auswählen (2310) des gemeinsamen Funksignals umfasst:
Scannen (2510) der Umgebung (202) nach den mehreren in der Umgebung (202) verfügbaren Funksignalen;
Bestimmen (2520) eines oder mehrerer Kandidatenfunksignale aus den mehreren Funksignalen;
Kommunizieren (2530), unter Verwendung der Kommunikationsschnittstelle (630), von Informationen, die sich auf das eine oder die mehreren Kandidatenfunksignale beziehen, an die eine oder mehrere anderen Mikrofonvorrichtungen (201); und
Empfangen (2540) einer Auswahl des gemeinsamen Funksignals aus dem einen oder mehreren Kandidatenfunksignalen.

## Revendications

1. Procédé de fonctionnement d'un système audio sans fil, le procédé comprenant les étapes consistant à :
établir (710) un réseau de communication sans fil entre une pluralité de dispositifs microphones (201) dans un environnement (202) ;
déduire (730) des horloges d'échantillonnage respectives pour échantillonner des signaux audio que doivent enregistrer des dispositifs microphones respectifs de la pluralité de dispositifs microphones (201) sur la base d'un signal radio commun ;
enregistrer (740) les signaux audio par les dispositifs microphones respectifs de la pluralité de dispositifs microphones (201) sur la base d'un échantillonnage des signaux audio par les horloges d'échantillonnage respectives ; et
sélectionner (720) le signal radio commun utilisé par la pluralité de dispositifs microphones (201) parmi une pluralité de signaux radio disponibles dans l'environnement,
le procédé étant **caractérisé en ce que** la sélection (720) du signal radio commun comprend les étapes consistant à :
balayer (810) l'environnement (202), par chaque dispositif microphone de la pluralité de dispositifs microphones (201), pour identifier la pluralité de signaux radio disponibles dans l'environnement (202) ;
déterminer (910) un ou plusieurs signaux radio candidats parmi la pluralité de signaux radio qui sont identifiés par chaque dispositif microphone de la pluralité de dispositifs microphones (201) pendant le balayage ; et
sélectionner (920) le signal radio commun parmi le ou les signaux radio candidats.

2. Procédé selon la revendication 1, dans lequel la sélection (920) du signal radio commun parmi le ou les signaux radio candidats comprend les étapes consistant à :
déterminer (1010) des puissances de signal candidates respectives reçues au niveau de dispositifs microphones respectifs de la pluralité de dispositifs microphones (201) pour chacun du ou des signaux radio candidats ; et
sélectionner (1020) le signal radio commun sur la base des puissances de signal candidates respectives.

3. Procédé selon la revendication 2, dans lequel la sélection (1020) du signal radio commun sur la base des puissances de signal candidates respectives comprend l'étape consistant à :
déterminer (1110) des puissances de signal candidates moyennes respectives associées à des signaux radio candidats respectifs du ou des signaux radio candidats, une des puissances de signal candidates moyennes respectives pour un signal radio candidat donné étant basée sur une moyenne des puissances de signal candidates associées à des dispositifs microphones de la pluralité de dispositifs microphones (201) pour le signal radio candidat donné.

4. Procédé selon la revendication 2 ou 3, dans lequel la sélection (1020) du signal radio commun sur la base des puissances de signal candidates respectives comprend l'étape consistant à :
sélectionner (1210) le signal radio commun sur la base des puissances de signal candidates respectives pour chaque dispositif microphone de la pluralité de dispositifs microphones (201) pour un du ou des signaux radio candidats qui sont supérieures à un seuil.

5. Procédé selon l'une quelconque des revendications 1 à 4, dans lequel la sélection (920) du signal radio commun parmi le ou les signaux radio candidats comprend en outre les étapes consistant à :
fournir (1310), à un dispositif de sélection, une information associée au ou aux signaux radio candidats ; et
déterminer (1320) le signal radio sur la base d'une sélection en provenance du dispositif de sélection.

6. Procédé selon l'une quelconque des revendications 1 à 5, dans lequel la sélection (920) du signal radio commun parmi le ou les signaux radio candidats comprend en outre les étapes consistant à :
communiquer (1410), au moyen du réseau de communication sans fil, par un premier dispositif microphone (201) de la pluralité de dispositifs microphones (201) à un second dispositif microphone (201) de la pluralité de dispositifs microphones (201), une information identifiant au moins un du ou des signaux radio candidats visibles pour le premier dispositif microphone (201), sur la base du balayage de l'environnement (202) ;
déterminer (1420), par le second dispositif microphone (201), qu'un signal radio candidat de l'au moins un du ou des signaux radio candidats visibles pour le premier dispositif microphone (201) est également visible pour le second dispositif microphone (201) ;
sélectionner (1430), par le second dispositif microphone (201), le signal radio candidat de l'au moins un du ou des signaux radio candidats en tant que signal radio commun ; et
communiquer (1440), par le second dispositif microphone (201) au premier dispositif microphone (201), le signal radio commun sélectionné par le second dispositif microphone (201).

7. Procédé selon l'une quelconque des revendications précédentes, dans lequel la déduction (730) des horloges d'échantillonnage respectives par des dispositifs microphones respectifs de la pluralité de dispositifs microphones (201) sur la base du signal radio commun comprend les étapes consistant à :
négocier (1510), sur le réseau de communication sans fil, un diviseur d'horloge commun parmi la pluralité de dispositifs microphones (201) ; et
diviser (1520), par chaque dispositif microphone de la pluralité de dispositifs microphones (201), le signal radio commun par le diviseur d'horloge commun pour déduire les horloges d'échantillonnage respectives.

8. Procédé selon la revendication 7, dans lequel la négociation (1510) du diviseur d'horloge commun parmi la pluralité de dispositifs microphones (201) comprend les étapes consistant à :
envoyer (1610), à un premier dispositif microphone (201) de la pluralité de dispositifs microphones (201), parmi des dispositifs microphones restants de la pluralité de dispositifs microphones (201), des diviseurs d'horloge suggérés respectifs ; et
sélectionner (1620), par le premier dispositif microphone (201), le diviseur d'horloge commun sur la base des diviseurs d'horloge suggérés respectifs parmi les dispositifs microphones restants de la pluralité de dispositifs microphones (201).

9. Procédé selon la revendication 8, dans lequel la sélection (1620) du diviseur d'horloge commun comprend les étapes consistant à :
moyenner (1710) les diviseurs d'horloge suggérés pour déterminer une valeur moyenne de diviseur commun ; et
arrondir (1720) la valeur moyenne de diviseur commun à un nombre entier afin d'obtenir le diviseur d'horloge commun.

10. Procédé selon la revendication 8 ou 9, dans lequel la sélection (1620) du diviseur d'horloge commun comprend les étapes consistant à :
déterminer (1810) un diviseur d'horloge le plus fréquent parmi les diviseurs d'horloge suggérés ; et
sélectionner (1820) le diviseur d'horloge le plus fréquent en tant que diviseur d'horloge commun.

11. Système d'enregistrement d'un événement, le système comprenant :
une pluralité de dispositifs microphones d'échantillonnage (2210), un dispositif microphone d'échantillonnage respectif de la pluralité de dispositifs microphones d'échantillonnage (2210) comprenant :
une interface de communication (630) configurée pour communiquer par l'intermédiaire d'un réseau de communication sans fil avec un ou plusieurs autres dispositifs microphones d'échantillonnage (2210) dans un environnement (202) ; et
un processeur (610) qui est couplé à l'interface de communication (630) et qui est configuré pour réaliser des opérations comprenant les opérations suivantes :
recevoir (2220) un signal radio commun qui est reçu par la pluralité de dispositifs microphones d'échantillonnage (2210) au moment de l'événement ;
synchroniser (2230) un échantillonnage du dispositif microphone d'échantillonnage respectif sur la base du signal radio commun ;
déduire (2320) une horloge d'échantillonnage sur la base de l'échantillonnage de synchronisation du dispositif microphone d'échantillonnage respectif (2210) ; et
enregistrer (2330) des signaux audio par le dispositif microphone d'échantillonnage respectif sur l'horloge d'échantillonnage,
le processeur (610) étant en outre configuré pour réaliser les opérations suivantes :
sélectionner (2310) le signal radio commun sur la base d'une pluralité de signaux radio disponibles dans l'environnement (202),
le système étant **caractérisé en ce que** la sélection (2310) du signal radio commun comprend les opérations suivantes :
balayer (2410) l'environnement (202) pour identifier la pluralité de signaux radio disponibles dans l'environnement (202) ;
déterminer (2420) un ou plusieurs signaux radio candidats parmi la pluralité de signaux radio ;
recevoir (2430), par l'interface de communication (630), une information relative à un ou plusieurs autres signaux radio candidats, en provenance du ou des autres dispositifs microphones (2210) ;
déterminer (2440) un sous-ensemble du ou des signaux radio candidats qui incluent le ou les autres signaux radio candidats en provenance du ou des autres dispositifs microphones (2210) ; et
sélectionner (2450) le signal radio commun parmi le sous-ensemble du ou des signaux radio candidats.

12. Système d'enregistrement d'un événement selon la revendication 11, dans lequel la sélection (2310) du signal radio commun comprend les opérations suivantes :
balayer (2510) l'environnement (202) pour identifier la pluralité de signaux radio disponibles dans l'environnement (202) ;
déterminer (2520) un ou plusieurs signaux radio candidats parmi la pluralité de signaux radio ;
communiquer (2530), au moyen de l'interface de communication (630), une information relative au ou aux signaux radio candidats, à l'autre ou aux autres dispositifs microphones (201) ; et
recevoir (2540) une sélection du signal radio commun parmi le ou les signaux radio candidats.
